# EUROPEAN PATENT APPLICATION

(11) **EP 4 764 785 A1**
(43) Date of publication of application: **24.06.2026**
(21) Application number: 25223561.9
(22) Date of filing: 15.12.2025
(51) Int. Cl.: G06F 1/26, G06F 1/3234, G06F 1/3287, G06F 1/3293

(54) **ELECTRONIC DEVICE AND DISPLAY DEVICE**

(30) Priority: 16.12.2024 KR 20240187186; 05.02.2025 KR 20250014289
(71) Applicant: LG Electronics Inc., Yeongdeungpo-gu Seoul 07336 (KR)
(72) Inventor: PARK, Sangho, Seoul (KR)
(74) Representative: Vossius & Partner Patentanwälte Rechtsanwälte mbB

(57) **Abstract**

An electronic device according to an embodiment of the present disclosure may comprise a battery; an external microcomputer; and a processor configured to transmit an entry command for a battery protection mode to the external microcomputer if the battery enters the battery protection mode to reduce a power consumption of the battery in a standby mode of the electronic device, wherein the external microcomputer is configured to, after disconnecting a line shared for a system operation between the external microcomputer and the processor according to the entry command, cut off a power supply to the processor.

## Description

### BACKGROUND OF THE INVENTION

### 1.Field of the Invention

The present disclosure relates to a display device, and more specifically, to a stand-type display device.

### 2. Discussion of the Related Art

Existing display devices are designed to be fixed, lacking mobility and flexibility, and have limitations in adjusting the screen angle and height, making them difficult to use in various environments. Additionally, they do not fully meet user needs due to the need for a continuous power connection or limited operating time when using a battery.

Modern users value flexibility in their living spaces, and there is an increasing demand to utilize display devices in various environments (e.g. bedroom, kitchen, outdoor).

Recently introduced stand-type display device enhances mobility and improves usability in various environments by designing the screen to be adjustable in angle, height, and direction. In addition, it provides the flexibility and convenience required by modern users through a built-in battery and integration of smart functions.

Conventional stand-type display devices use 3.5V system power in power a standby mode to minimize SoC (System On Chip) power consumption.

However, when the display device is turned off and on standby with the power adapter removed, the battery provided in the display device is completely discharged after 7 days due to the same standby power consumption as a regular TV, making long-term storage difficult.

### SUMMARY OF THE INVENTION

The purpose of the present disclosure may be to a delay battery discharge by minimizing a standby power consumption of the battery when the adapter that supplies power to the display device is disconnected.

The purpose of the present disclosure may be to minimize the standby power consumption of the battery by blocking power supply to the processor when the external power source that supplies power to the display device is disconnected.

The purpose of the present disclosure may be to prevent a conflict between the processor and the external microcomputer when the display device and the external power source are connected to or disconnected from each other.

An electronic device according to an embodiment of the present disclosure may comprise a battery; an external microcomputer; and a processor configured to transmit an entry command for a battery protection mode to the external microcomputer if the battery enters the battery protection mode to reduce a power consumption of the battery in a standby mode of the electronic device, wherein the external microcomputer is configured to, after disconnecting a line shared for a system operation between the external microcomputer and the processor according to the entry command, cut off a power supply to the processor.

A display device according to an embodiment of the present disclosure may comprise a stand; and a head which is supported by the stand and including a display, a battery, an external microcomputer, and a processor, wherein the processor is configured to transmit an entry command for a battery protection mode to the external microcomputer if the battery enters the battery protection mode to reduce a power consumption of the battery in a standby mode of the display device, wherein the external microcomputer is configured to, after disconnecting a line shared for a system operation between the external microcomputer and the processor according to the entry command, cut off a power supply to the processor.

According to an embodiment of the present disclosure, when the adapter that supplies power to the display device is disconnected, standby power consumption is minimized and the battery discharge period is delayed, allowing the battery to be used for a long period of time.

According to an embodiment of the present disclosure, when the external power supply that supplies power to the display device is disconnected, the standby power consumption of the battery may be minimized by blocking the power supply to the processor.

According to an embodiment of the present disclosure, an external microcomputer may prevent a collision between the external microcomputer and the processor by adjusting the timing between a signal for controlling a switch and a signal for controlling power supply to the processor.

### BRIEF DESCRIPTION OF THE DRAWINGS

FIGS. 1A and 1B are diagrams illustrating the structure of a display device according to an embodiment of the present disclosure.
FIG. 2 is a block diagram showing the configuration of a display device according to an embodiment of the present disclosure.
FIGS. 3 is a diagram illustrating the structure of a display device according to an embodiment of the present disclosure from a power supply perspective.
FIG. 4 is a diagram for explaining the detailed configuration of a head according to an embodiment of the present disclosure.
FIG. 5 is a diagram for explaining the detailed configuration of a main board according to an embodiment of the present disclosure.
FIG. 6 is a diagram for explaining a method of operating an electronic device according to an embodiment of the present disclosure.
FIG. 7A is a timing diagram between a low signal and a power cut-off signal transmitted to each switch when entering the battery protection mode, and FIG. 7B is a diagram illustrating a timing diagram between a high signal and a power supply signal transmitted to each switch when the battery protection mode is released.
FIG. 8 is a diagram illustrating a configuration for ensuring power stability of an external microcomputer when the battery is discharged according to an embodiment of the present disclosure.

### DETAILED DESCRIPTION OF THE PREFERRED EMBODIMENTS

Hereinafter, embodiments related to the present invention will be described in more detail with reference to the drawing. The suffixes "module" and "part" for component used in the following description are given or used interchangeably only for the ease of preparing the specification, and do not have distinct meanings or roles in themselves.

The directional indications Up (U), Down (D), Left (Le), Right (Ri), Front (F), and Rear (R) shown in the drawings are provided for the convenience of explanation only and do not limit the technical ideas disclosed in this specification.

The display device according to an embodiment of the present invention is, for example, an intelligent display device that adds a computer support function to the broadcast reception function, and is faithful to the broadcast reception function while adding an Internet function, etc., such as a handwriting input device and a touch screen. Alternatively, it may be equipped with a more convenient interface such as a spatial remote control. In addition, by supporting wired or wireless Internet functions, it is possible to connect to the Internet and a computer and perform functions such as email, web browsing, banking, or gaming. A standardized general-purpose OS may be used for these various functions.

Accordingly, in the display device described in the present invention, for example, various applications may be freely added or deleted on a general-purpose OS kernel, so various user-friendly functions may be performed. More specifically, the display device may be, for example, a network TV, HBBTV, smart TV, LED TV, OLED TV, etc., and in some cases, may also be applied to a smartphone.

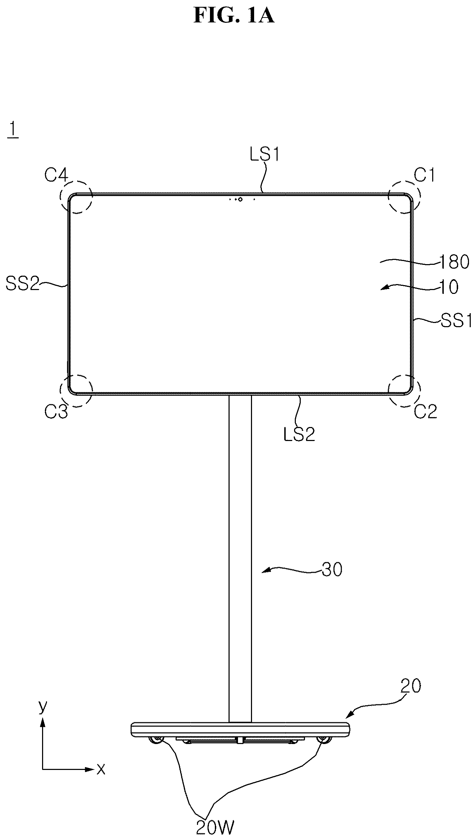

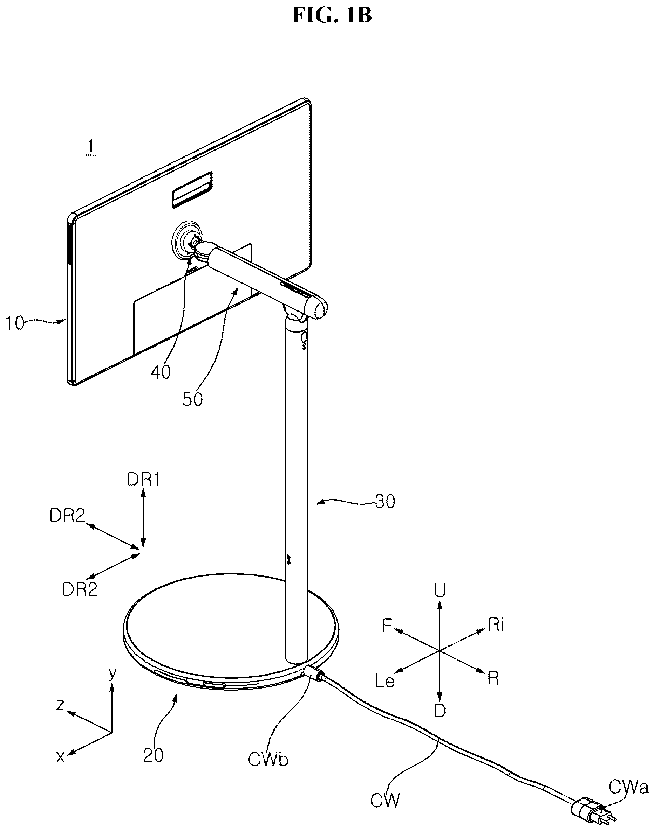

FIGS. 1A and 1B are diagrams illustrating the structure of a display device according to an embodiment of the present disclosure.

FIGS.1A and 1B, the display device 1 may include a head 10. The head 10 may include a display panel that displays an image.

The head 10 may include a first long side (LS1), a second long side (LS2) opposing the first long side (LS1), a first short side (SS1) adjacent to the first long side (LS1), and the second long side (LS2) and a second short side (SS2) opposite to the first short side (SS1).

Meanwhile, for convenience of explanation, the length of the first and second long sides LS1 and LS2 is shown and described as being longer than the length of the first and second short sides SS1 and SS2. It may be possible that the length of the second long sides LS1 and LS2 is approximately the same as the length of the first and second short sides SS1 and SS2.

A direction parallel to the short sides (SS1, SS2) of the head 10 may be referred to as an up-down direction or a first direction DR1. The direction parallel to the long sides LS1 and LS2 of the head 10 may be referred to as a left and right direction or a second direction DR2. A direction perpendicular to the short sides (SS1, SS2) and long sides (LS1, LS2) of the head 10 may be referred to as a forward-backward direction or a third direction DR3.

The direction in which the head 10 displays an image may be referred to as a front (F, z), and the opposite direction may be referred to as a rear (R). The first short side (SS1) may be referred to as a left side (Le, x). The second short side (SS2) may be referred to as a right side (Ri). The first long side (LS1) may be referred to as a upper side (U, y). The second long side (LS2) may be referred to as a bottom side (D).

The first long side (LS1), the second long side (LS2), the first short side (SS1), and the second short side (SS2) may be referred to as edges of the head 10. The point where the first long side (LS1), the second long side (LS2), the first short side (SS1), and the second short side (SS2) meet each other may be called a corner. The point where the first short side (SS1) and the first long side (LS1) meet may be the first corner (C1). The point where the first short side (SS1) and the second long side (LS2) meet may be the second corner (C2). The point where the second short side (SS2) and the second long side (LS2) meet may be the third corner (C3). The point where the second short side (SS2) and the first long side (LS1) meet may be the fourth corner (C4).

The display device 1 may include stand 20, 30, 40, and 50 that support the head 10.

The stand 20, 30, 40, and 50 may include a base 20, a pole 30, a rotatable connector 40, and a support arm 50.

The stand 20, 30, 40, and 50 may be detachably coupled to the head 10.

The base 20 may be placed on the ground. The base 20 may be round or angular. A plurality of wheels 20W may be provided on a lower surface of the base 20.

A plug (CWa) connected to a power cable (CW) may be connected to an concentric plug that supplies an external power.

A jack (CWb) of the power cable (CW) may be connected to the base 20.

The adapter (CWc) may convert an external AC power source into DC power and supply the converted DC power to the jack (CWb).

A battery (not shown) may be built into the base 20, pole 30, support arm 50, and/or head 10, and may be charged by power supplied through the power cable (CW). The display device 1 may receive power from the battery and may be operated while disconnected from the power cable (CW).

The pole 30 may extend vertically from the base 20. A lower end of the pole 30 may be coupled to the pole 30 adjacent to a circumference of the base 20.

The support arm 50 may extend in a direction crossing the pole 30 and may be coupled to a top of the pole 30. The rotatable connector 40 may be located between the head 10 and the support arm 50 and may be coupled to the head 10 and the support arm 50.

The head 10 may be supported by stand 20, 30, 40, and 50 and may be spaced upward from the ground.

The rotatable connector 40 may rotate the head 10 up and down or left and right. When an external force is applied to the rotatable connector 40, the head 10 may be rotated in one or more of the up/down/left/right directions.

The rotatable connector 40 and the head 10 may have a detachable structure.

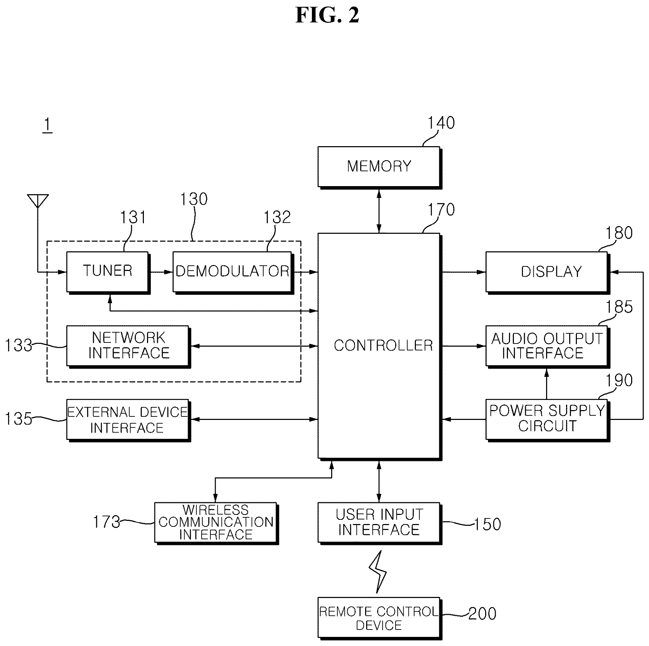

FIG. 2 is a block diagram showing a configuration of a display device according to an embodiment of the present disclosure.

Referring to FIG. 2, the display device 1 may include a broadcast receiver 130, an external device interface 135, a memory 140, a user input interface 150, a controller 170, a wireless communication interface 173, a display 180, a speaker 185, and a power supply circuit 190.

The broadcast receiver 130, the external device interface 135, the memory 140, the user input interface 150, the controller 170, the wireless communication interface 173, the display 180, the speaker 185, and the power supply circuit 190 may each be provided in the head 10. However, they are not limited to this arrangement, and some elements may also be provided in the stand 20, 30, 40, 50.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, audio signal, and data signal to a format capable of being output.

The external device interface 135 may receive an application or a list of applications in an external device adjacent thereto, and transmit the same to the controller 170 or the memory 140.

The external device interface 135 may provide a connection path between the display device 1 and an external device. The external device interface 135 may receive one or more of images and audio output from an external device connected to the display device 1 in a wired or wireless manner, and transmit the same to the controller 170.

The external device interface 135 may include a plurality of external input terminals. The plurality of external input terminals may include an RGB terminal, one or more High Definition Multimedia Interface (HDMI) terminals, and a component terminal.

The image signal of the external device input through the external device interface unit 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example.

The external device interface 135 may be provided in one or more of the head 10 or the stand 20, 30, 40, 50.

The network interface 133 may provide an interface for connecting the display device 1 to a wired/wireless network including an Internet network.

The network interface 133 may transmit or receive data to or from other users or other electronic devices through a connected network or another network linked to the connected network.

In addition, a part of content data stored in the display device 1 may be transmitted to a selected user among a selected user or a selected electronic device among other users or other electronic devices registered in advance in the display device 1.

The network interface 133 may access a predetermined web page through the connected network or the other network linked to the connected network. That is, it is possible to access a predetermined web page through a network, and transmit or receive data to or from a corresponding server.

The network interface 133 may receive content or data provided by a content provider or a network operator. That is, the network interface 133 may receive content such as movies, advertisements, games, VOD, and broadcast signals and information related thereto provided from a content provider or a network provider through a network.

The network interface 133 may receive update information and update files of firmware provided by the network operator, and may transmit data to an Internet or content provider or a network operator.

The network interface 133 may select and receive a desired application from among applications that are open to the public through a network.

The memory 140 may store programs for signal processing and control of the controller 170, and may store images, audio, or data signals, which have been subjected to signal-processed.

The memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 1 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 1.

In addition, the controller 170 may control the display device 1 by a user command input through the user input interface 150 or an internal program and connect to a network to download an application a list of applications or applications desired by the user to the display device 1.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface unit or an image which is stored in the memory 140 to be displayed on the display 180. In this case, an image being displayed on the display 180 may be a still image or a moving image, and may be a 2D image or a 3D image.

In addition, the controller 170 may allow content stored in the display device 1, received broadcast content, or external input content input from the outside to be played back, and the content may have various forms such as a broadcast image, an external input image, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies.

The wireless communication interface 173 may support wireless communication between the display device 1 and a wireless communication system, between the display device 1 and another display device 1, or between the display device 1 and a network in which the display device 1 (or an external server) is located through wireless area networks. The wireless area networks may be wireless personal area networks.

The wireless communication interface 173 may detect (or recognize) a wearable device capable of communication around the display device 1.

When the detected wearable device is an authenticated device to communicate with the display device 1 according to the present disclosure, the controller 170 may transmit at least a portion of data processed by the display device 1 to the wearable device through the wireless communication interface 173. Therefore, a user of the wearable device may use data processed by the display device 1 through the wearable device.

The display 180 may convert image signals, data signals, and OSD signals processed by the controller 170, or image signals or data signals received from the external device interface 135 into R, G, and B signals, and generate drive signals.

Meanwhile, since the display device 1 shown in FIG. 1 is only an embodiment of the present disclosure, some of the illustrated components may be integrated, added, or omitted depending on the specification of the display device 1 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 1 shown in FIG. 1, the display device 1 may receive an image through the network interface 133 or the external device interface 135 without a tuner 131 and a demodulator 132 and play back the same.

For example, the display device 1 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 1 as described with reference to FIG. 1 and but also one of an image processing device such as the separated set-top box and a content playback device including the display 180 the speaker 185.

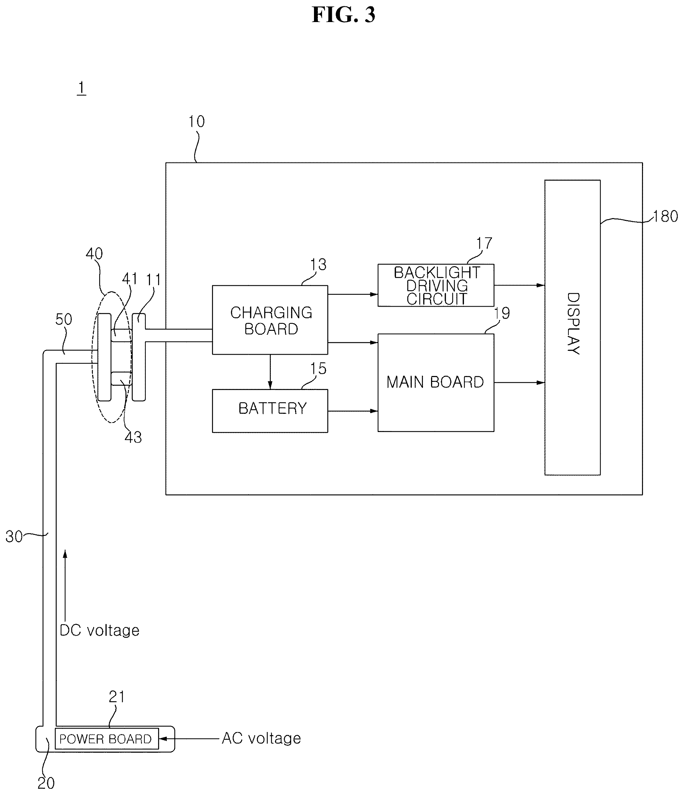

FIGS. 3 is a diagram illustrating the structure of a display device according to an embodiment of the present disclosure from a power supply perspective.

Referring to FIG. 3, the display device 1 may include stand 20, 30, 40, and 50 and a head 10.

The stand 20, 30, 40, and 50 may include a base 20, a pole 30, a rotatable connector 40, and a support arm 50.

The stand 20, 30, 40, and 50 may be detachably coupled to the head 10.

The base 20 may include a power board 21. That is, the power board 21 may be built into the base 20. The power board 21 may receive an AC power from an external power source connected through the plug (CWa) and convert the received AC power into a DC power. The power board 21 may supply the DC power to the head 10 through one or more pogo pin 41, 43 included in the rotatable connector 40.

The power board 21 may receive AC power from an external power source connected via the plug (CWa) and convert the received AC power into DC power. The power board 21 may supply the DC power to the head 10 through one or more pogo pins 41, 43 included in the connector 40.

The power board 21 may include an adapter that may convert the AC power to the DC power. The adapter may be a kind of the extermal power source

The rotatable connector 40 may include one or more pogo pin 41, 43. One or more pogo pin 41, 43 may be pins that electrically connect the head 10 and the stand 20, 30, 40, and 50.

In FIG. 3, the rotatable connector 40 is described as having two pogo pin 41, 43, but this is only an example.

One or more pogo pin 41, 43 may be connected to a head connector 11 that includes one or more contact terminals that contact the one or more pogo pin 41, 43. The head connector 11 may be a pogo pin socket into which pogo pin 41, 43 are inserted to form electrical contact.

The head 10 may include the head connector 11, a charging board 13, a battery 15, a backlight driving circuit 17, a main board 19, and a display 180.

The head connector 11 may include one or more pogo pin 41, 43 and one or more contact terminals for electrical contact. The head connector 11 may provide direct current power supplied from one or more pogo pin 41, 43 to the charging board 13 through one or more contact terminals. The head connector 11 may be an interface for electrical connection between one or more pogo pin 41, 43 and the charging board 13.

The charging board 13 may provide direct current power supplied from the power board 21 to the elements provided in the head 10.

The charging board 13 may provide direct current power supplied from the power board 21 to one or more of the battery 15, the backlight driving circuit 17, or the main board 19.

The charging board 13 may control the power supplied to the battery 15 or the main board 19.

The battery 15 may supply direct current power to one or more of the backlight driving circuit 17 or the main board 19.

The battery 15 may be included in the charging board 13 or may be provided separately from the charging board 13.

The battery 15 may supply direct current power to the head 10 through a discharge when the power board 21 or the adapter provided on the power board 21 is separated from the head 10.

The backlight driving circuit 17 may be a circuit for driving a backlight of the display 180. The display 180 may include a liquid crystal display panel and the backlight that outputs light to the liquid crystal display panel. The backlight driving circuit 17 may control the light output of the backlight based on a dimming value.

The main board 19 may control an overall operation of the head 10. The main board 19 may include one or more processors. Each of one or more processors may consist of one chip.

The display 180 may display an image. When the display 180 includes an Organic Light Emitting Diode (OLED) display panel, the backlight driving circuit 17 may not be included in the head 10.

Power modes of the display device 1 may include a normal mode and a standby mode. The normal mode may be a mode in which the screen of the display 180 is turned on and power is consumed so that all components operate normally.

The standby mode may be a mode that consumes only minimal power to drive the display device 1. The standby mode may be a mode in which power is supplied to only some of the components of the display device 1 according to a power-off command. In the standby mode, only the minimum power required to receive an IR signal or a physical key provided in the head 10 may be used.

The operating mode of the battery may include a general battery mode and a battery protection mode. The general battery mode may be a mode in which power charged in the battery is supplied to the processor 410, which will be described later. The battery protection mode may be a mode in which power charged in the battery is supplied to the battery protection circuit 420 rather than the processor 410. The battery protection mode may be a mode that operates when an external power source is not connected to the display device 1 and the power mode of the display device 1 is in the standby mode.

When the external power source is connected to the display device 1, the battery 15 may not enter the battery protection mode. Even if the power is turned off after the display device 1 is set to enter the battery protection mode and, the display device 1 may enter the battery protection mode after the external power source is disconnected.

When the external power source is connected to charge the battery 15 under the battery protection mode, the display device 1 may release the battery protection mode and then charge the battery 15 through the external power source.

When the battery operation mode is the general battery mode, the amount of tasks performed by the processor 410 may be greater than the amount of tasks performed by the battery protection circuit 420. Accordingly, the amount of power consumed by the processor 410 in the general battery mode may also be greater than the amount of power consumed by the battery protection circuit 420.

When the operation mode of the battery is the battery protection mode, the battery 15 may not supply power to the processor 410 and may only supply power to the battery protection circuit 420. Accordingly, the amount of power consumed by the processor 410 under the battery protection mode may be 0.

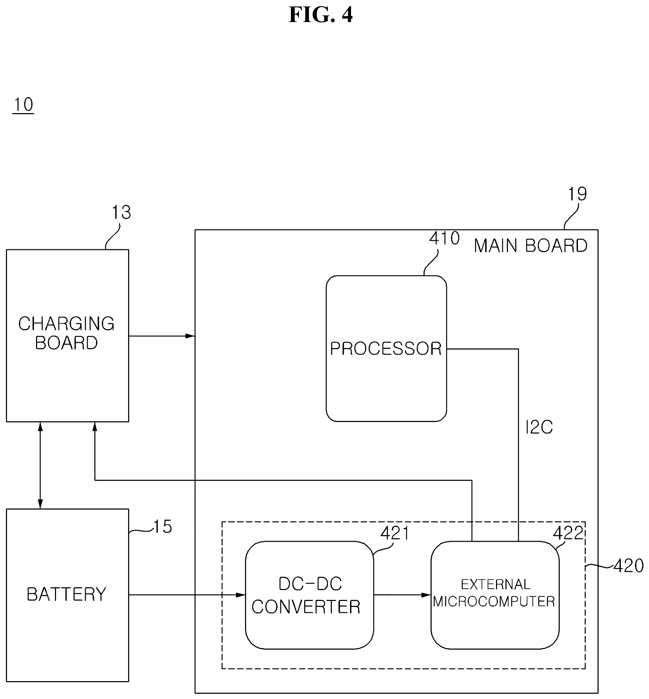

FIG. 4 is a diagram for explaining the detailed configuration of a head according to an embodiment of the present disclosure.

Referring to FIG. 4, the head 10 may include a charging board 13, a battery 15, and a main board 19.

The main board 19 may include a processor 410 and a battery protection circuit 420.

The processor 410 may determine whether the operation mode of the battery 15 has entered the battery protection mode.

If an entry into the battery protection mode is confirmed, the processor 410 may stop communication with the battery 15. The processor 410 may terminate tasks being performed while stopping communication with the battery 15.

Thereafter, the processor 410 may transmit an entry command to enter the battery protection mode to the external microcomputer 422.

The processor 410 may be referred to as a System On Chip (SoC). The processor 410 may include an internal microcomputer(not shown). The internal microcomputer may perform some of the overall operations of the processor 410.

The battery protection circuit 420 may include a DC-DC converter 421 and an external microcomputer 422.

The battery protection circuit 420 may include only the external microcomputer 422.

The battery protection circuit 420 may be a circuit to minimize a consumption of power charged in the battery 15.

The battery protection circuit 420 may be a circuit for minimizing consumption of power charged in the battery 15 when the connection between the display device 1 and an external power source is disconnected and the power mode of the display device 1 is in the standby mode.

The DC-DC converter 421 may convert the DC voltage supplied from the battery 15 into a preset DC voltage, and supply the converted DC voltage to the external microcomputer 422. The preset DC voltage may be 3.3V, but this is only an example.

The external microcomputer 422 may be driven using the converted DC voltage supplied from the DC-DC converter 421.

The external microcomputer 422 may separate a line sharing system operation with the processor 410 according to the received entry command.

Afterwards, the external microcomputer 422 may control the charging board 13 to cut off the power supply to the processor 410.

The external microcomputer 422 may determine whether the battery protection mode has been released.

When it is determined that the battery protection mode is released, the external microcomputer 422 may control the charging board 13 to supply power to the processor 410.

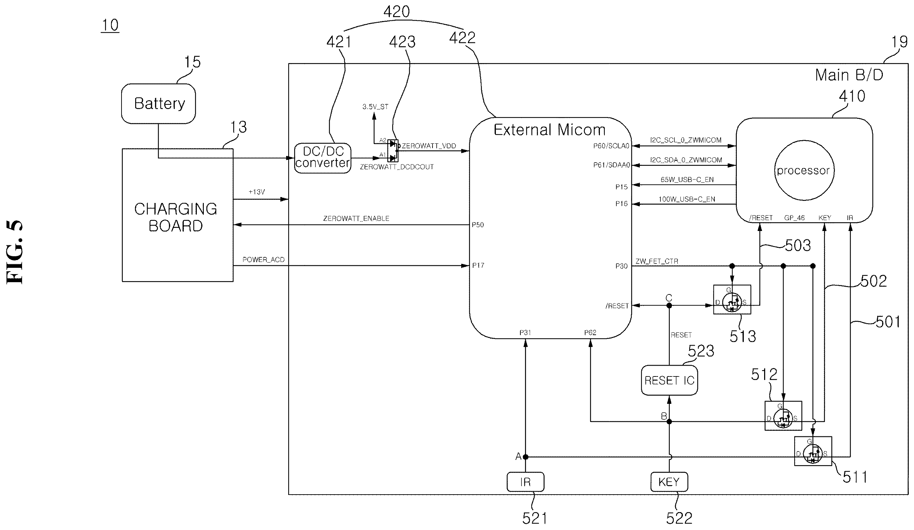

FIG. 5 is a diagram for explaining the detailed configuration of a main board according to an embodiment of the present disclosure.

Referring to FIG. 5, the main board 19 may include the processor 410, the battery protection circuit 420, a plurality of lines 501, 502, and 503, a plurality of switches 511, 512, and 513, an IR receiver 521, a key input interface 522, and a reset IC 523.

The processor 410 may control a plurality of elements provided on the main board 19. Before entering the battery protection mode, the processor 410 may perform a function corresponding to an IR signal received from the IR receiver 521, perform a function corresponding to a key input signal received from the key input interface 522, or reset the display device 1 according to a reset signal received from the reset IC 523.

The battery protection circuit 420 may be a circuit that minimizes the power consumed by the battery 15 in the battery protection mode. The battery protection circuit 420 may include the DC-DC converter 421, the external microcomputer 422, and a power supply interface 423.

Each of the plurality of lines 501, 502, and 503 may be a line for sharing the system operation between the processor 410 and the external microcomputer 422. Each line may be referred to as a shared line.

The first line 501 may be a line for electrically connecting the processor 410 and the external microcomputer 422 to share the IR signal received by the IR receiver 521.

The second line 502 may be a line for electrically connecting the processor 410 and the external microcomputer 422 to share the key input signal received by the key input interface 522.

The third line 503 may be a line for electrically connecting the processor 410 and the external microcomputer 422 to share the reset signal received by the reset IC 523.

Each of the switches 511, 512, and 513 may correspond to each of the lines 501, 502, and 503. Each of the plurality of switches 511, 512, and 513 is disposed on the plurality of lines 501, 502, and 503 to electrically connect or disconnect the processor 410 and the external microcomputer 422.

The first switch 511 may be disposed on the first line 501 connected to the processor 410 with respect to the first node A. The second switch 512 may be disposed on the second line 502 connected to the processor 410 with respect to the second node B. The third switch 513 may be placed on the third line 503 connected to the processor 410 with respect to the third node C.

The external microcomputer 422 may electrically disconnect the processor 410 and the external microcomputer 422 by transmitting a low signal to each of the plurality of switches 511, 512, and 513 in the battery protection mode. Thereafter, the external microcomputer 422 may transmit a power cut-off signal to the charging board 13 to cut off the power supplied to the processor 410.

When the battery protection mode is released, the external microcomputer 422 may transmit a power supply signal to the charging board 13 to supply power to the processor 410. After the power is supplied to the processor 410, the external microcomputer 422 transmits a high signal to each of the plurality of switches 511, 512, and 513, thereby electrically connecting the processor 410 and the external microcomputer 422.

The IR receiver 521 may receive the IR signal from a remote control device and transmit the received IR signal to the processor 410 or the external microcomputer 422.

The key input interface 522 may receive the key input signal through one or more physical buttons provided on the head 10 and transmit the received key input signal to the processor 410 or the external microcomputer 422.

If the key input signal received from the key input interface 522 is the reset signal indicating system reset, the reset IC 523 may transmit the reset signal to the processor 410 or the external microcomputer 422.

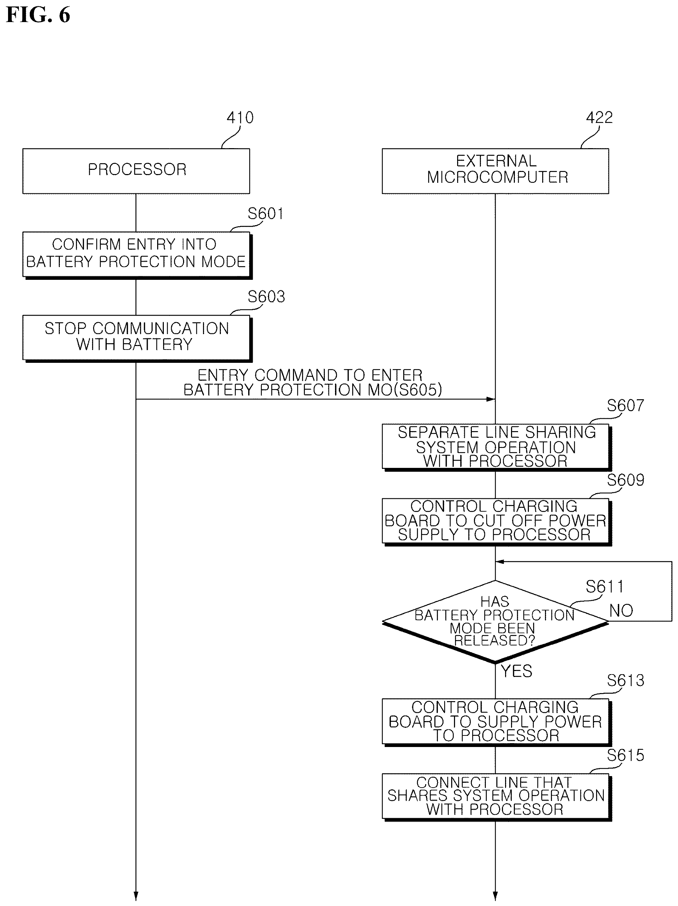

FIG. 6 is a diagram for explaining a method of operating an electronic device according to an embodiment of the present disclosure.

Hereinafter, the embodiment of FIG. 6 will be described with reference to FIGS. 1A to 5.

The head 10 or display device 1 may be referred to as an electronic device.

Referring to FIG. 6, the processor 410 may confirm an entry into the battery protection mode (S601).

In one embodiment, the operating mode of the battery may include a battery normal mode and a battery protection mode. The battery normal mode may be a mode in which power charged in the battery is supplied to the processor 410. The battery protection mode may be a mode in which power charged in the battery is supplied to the battery protection circuit 420 rather than the processor 410. The battery protection mode may be a mode for minimizing power consumption of the battery 15 when the display device 1 is in the standby mode.

In one embodiment, processor 410 may confirm the entry into the battery protection mode upon receiving a user input. The processor 410 may provide an entry menu for entering the battery protection mode through a menu displayed on the display 180, and may confirm the entry into the battery protection mode by receiving the user input for manipulating the entry menu.

In another embodiment, the processor 410 may determine that the battery operation mode has entered the battery protection mode when the external power source connected to the display device 1 is turned off and the power mode of the display device 1 is switched to the standby mode.

In another embodiment, the processor 410 may determine that the battery operation mode has entered the battery protection mode when the external power source connected to the display device 1 is turned off, the power mode of the display device 1 is switched to the standby mode, and the standby mode is maintained for more than a certain period of time.

If the entry into the battery protection mode is confirmed, the processor 410 may stop a communication with the battery 15 (S603).

The processor 410 may terminate the tasks being performed while stopping the communication with the battery 15.

Afterwards, the processor 410 may transmit an entry command to enter the battery protection mode to the external microcomputer 422 (S605).

The processor 410 may transmit the entry command to the external microcomputer 422 to request the entry into the battery protection mode to the external microcomputer 422 through I2C (Inter-Integrated Circuit) communication. I2C communication may be a two-way communication using two lines for data signal and clock signal.

The external microcomputer 422 may separate a line sharing system operation with the processor 410 according to the received entry command (S607).

The system operation may be an operation of receiving an IR signal or a key input signal and performing a function corresponding to the received signal. The system operation may be one of a power-on operation according to the IR signal or the key input signal, or a reset operation according to reception of the key input signal, but this is only an example.

There may be one or more lines 501, 502, and 503 that share system operations between the processor 410 and the external microcomputer 422.

Referring to FIG. 5, the main board 19 includes the first line 501 for sharing the IR signal received by the IR receiver 521, may include second line 502 for sharing the key input signal received by the key input interface 522, and may include third line 503 for sharing the reset signal received by the key input interface 522 for resetting the system.

The first switch 511 may be placed on the first line 501 to connect or disconnect the processor 410 and the external microcomputer 422.

The second switch 512 may be disposed on the second line 502 to connect or disconnect the processor 410 and the external microcomputer 422.

The third switch 513 may be placed on the third line 503 to connect or disconnect the processor 410 and the external microcomputer 422.

Each of the first switch 511, the second switch 512, and the third switch 513 may be composed of a field effect transistor (FET), but this is only an example. Each of the first switch 511, second switch 512, and third switch 513 may be referred to as a FET controller.

When the external microcomputer 422 receives the entry command for entering the battery protection mode from the processor 410, it may transmit a switch control signal to each of the first switch 511, the second switch 512, and the third switch 513. The switch control signal may be referred to as the ZW_FET_CTR signal. The switch control signal may be either a low signal or a high signal.

The low signal may be a signal for separating the processor 410 and the external microcomputer 422 by turning off each of the first switch 511, the second switch 512, and the third switch 513.

After each of the first switch 511, the second switch 512, and the third switch 513 is turned off, the received IR signal or the key input signal may be transmitted only to the external microcomputer 422 and not to the processor 410.

Afterwards, the external microcomputer 422 may control the charging board 13 to cut off the power supply to the processor 410 (S609).

The external microcomputer 422 may disconnect the line that shares the system operation with the processor 410 and then cut off the power supply to the processor 410.

If the line through which the external microcomputer 422 and the processor 410 share the system operation is not separated and the power supply to the processor 410 is cut off, the external microcomputer 422 and the processor 410 are connected through the line. In this case, as the processor 410 whose power supply is cut off draws power from the external microcomputer 422, a damage may occur to the external microcomputer 422 or the processor 410, and a signal collision may occur between the processor 410 and the microcomputer 422.

For example, a current may flow to the processor 410 through the line, or a reverse voltage may be transmitted, causing the processor 410 to not be completely turned off and causing an abnormal operation. Additionally, since the external microcomputer 422 and the processor 410 are connected through the line when power is not supplied to the processor 410, the signal collision may occur between them.

Accordingly, in an embodiment of the present disclosure, the external microcomputer 422 disconnects the line sharing the system operation with the processor 410 and then cuts off the power supply to the processor 410, thereby preventing damage to the external microcomputer 422 or the processor 410 and signal collision between the processor 410 and the microcomputer 422.

The external microcomputer 422 may transmit a power cut-off signal to the charging board 13 to cut off the power supply to the processor 410. The power-off signal may be referred to as a ZEROWATT _ENABLE high signal. The charging board 13 may cut off the power supplied to the processor 410 according to the power cut-off signal received from the external microcomputer 422.

Accordingly, under the battery protection mode, the power charged in the battery 15 may not be transmitted to the processor 410 and may be transmitted only to the external microcomputer 422.

Under the battery protection mode, the power charged in the battery 15 is not supplied to the processor 410 but only to the external microcomputer 422, so a standby power consumption may be greatly reduced.

Since the standby power consumption is greatly reduced, a discharging period of the battery 15 may be delayed when the external power source is disconnected.

The external microcomputer 422 may determine whether the battery protection mode has been released (S611).

The external microcomputer 422 may monitor a signal for the operation of the display device 1 under the battery protection mode and determine whether to release the battery protection mode based on a monitoring result.

For example, when the external microcomputer 422 receives the IR signal or the key input signal, the external microcomputer 422 may determine that the battery protection mode is released.

As another example, when the external microcomputer 422 detects an external power connection signal indicating that the external power source, such as an adapter, is connected to the display device 1, the external microcomputer 422 may determine that the battery protection mode is released.

Each of the IR signal, the key input signal, or the external power connection signal may be a trigger signal for disabling the battery protection mode.

When it is determined that the battery protection mode is released, the external microcomputer 422 may control the charging board 13 to supply power to the processor 410 (S613).

In one embodiment, when the external microcomputer 422 determines that the battery protection mode is released upon receiving the IR signal or the key input signal, the external microcomputer 422 may control the charging board 13 to supply power to the processor 410 through the battery 15.

In another embodiment, when the external microcomputer 422 determines that the battery protection mode is released upon receiving the external power connection signal, the external microcomputer 422 may control the charging board 13 to supply power to the processor 410 through the external power source.

The external microcomputer 422 may transmit a power supply signal to the charging board 13 to supply power to the processor 410. The power supply signal may be referred to as a ZEROWATT_ENABLE low signal. The charging board 13 may supply power to the processor 410 according to the power supply signal received from the external microcomputer 422.

Afterwards, the external microcomputer 422 may connect the line that shares the system operation with the processor 410 (S615).

When the battery protection mode is released, the external microcomputer 422 may supply the power to the processor 410 and then connect the line shared with the processor 410.

If the battery protection mode is released and the line through which the external microcomputer 422 and the processor 410 share system operation is connected without supplying power to the processor 410, as the processor 410 draws power from the external microcomputer 422, the damage may occur to the external microcomputer 422 or the processor 410 and the signal collision between the processor 410 and the microcomputer 422 may be occurred.

Accordingly, in an embodiment of the present disclosure, if the battery protection mode is released, the external microcomputer 422 may supply the power to the processor 410 and then connect the line for sharing the system operation.

Accordingly, the damage to the external microcomputer 422 or the processor 410 and the signal collision between the processor 410 and the microcomputer 422 may be prevented.

Meanwhile, if the battery protection mode is released, the external microcomputer 422 may supply the power to the processor 410 and then transmit a high signal to each of the first switch 511, the second switch 512, and the third switch 513. The high signal may be a signal for connecting the processor 410 and the external microcomputer 422 by turning on each of the first switch 511, the second switch 512, and the third switch 513.

After each of the first switch 511, the second switch 512, and the third switch 513 is turned on, the received IR signal or the key input signal may be transmitted to the external microcomputer 422 and the processor 410, respectively.

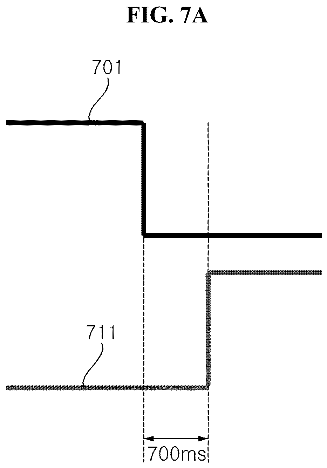

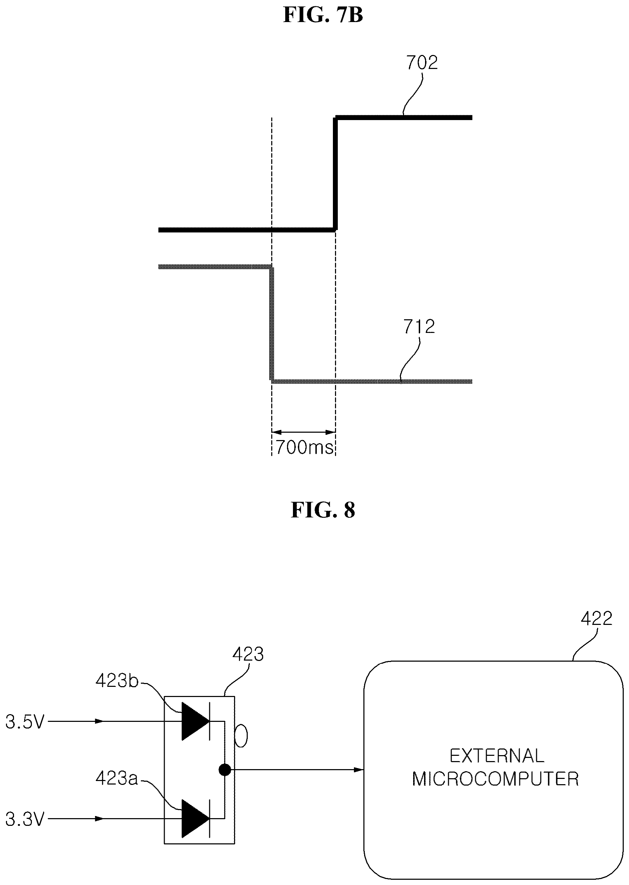

FIG. 7A is a timing diagram between a low signal and a power cut-off signal transmitted to each switch when entering the battery protection mode, and FIG. 7B is a diagram illustrating a timing diagram between a high signal and a power supply signal transmitted to each switch when the battery protection mode is released.

Referring to FIG. 7A, the low signal 701 may be a switch-off signal that the external microcomputer 422 transmits to each of the first switch 511, the second switch 512, and the third switch 513 when entering the battery protection mode. The external microcomputer 422 and the processor 410 may be separated from each other according to the switch-off signal.

When each of the first switch 511, the second switch 512, and the third switch 513 is comprised of a FET, the low signal may be a gate control signal transmitted to the gate terminal to turn off the FET.

The power cut-off signal 711 may be a signal transmitted to the charging board 13 to cut off power supplied to the processor 410.

When the external microcomputer 422 enters the battery protection mode, the external microcomputer 422 transmits a low signal 701 to each of the first switch 511, the second switch 512, and the third switch 513, and after a certain period of time, a power cut-off signal 711 may be transmitted to the charging board 13. The certain period of time may be 700ms, but this is only an example.

For a system stability, the external microcomputer 422 may disconnect a line that shares the system operation with the processor 410 and then cut off the power supply to the processor 410.

Referring to FIG. 7B, a high signal 702 may be a switch-on signal that the external microcomputer 422 transmits to each of the first switch 511, the second switch 512, and the third switch 513 when the battery protection mode is released. According to the switch-on signal, the external microcomputer 422 and the processor 410 may be connected to each other through a shared line.

When each of the first switch 511, second switch 512, and third switch 513 is composed of a FET, the high signal may be a gate control signal transmitted to the gate terminal to turn on the FET.

The power supply signal 712 may be a signal transmitted to the charging board 13 to supply power to the processor 410.

When the battery protection mode is released, the external microcomputer 422 transmits a power supply signal 712 to the charging board 13, and after a certain period of time has elapsed, the external microcomputer 422 transmits the high signal 702 to each of the first switch 511, the second switch 512, and the third switch 513. The certain period of time may be 700ms, but this is only an example.

The external microcomputer 422 may first supply power to the processor 410 for the system stability and then connect the line shared with the processor 410.

As such, according to an embodiment of the present disclosure, the external microcomputer 422 adjusts a timing between a signal for controlling the switch and a signal for controlling power supply to the processor 410, thereby preventing the external microcomputer 422 and the processor 410 from colliding.

FIG. 8 is a diagram illustrating a configuration for ensuring power stability of an external microcomputer when the battery is discharged according to an embodiment of the present disclosure.

Referring to FIG. 8, when the battery 15 is charged, 3.3V may be supplied from the battery 15 to the external microcomputer 422 through the DC-DC converter 421. When the display device 1 is connected to the adapter while the battery 15 is in a dead battery state, 3.5V power may be supplied to the external microcomputer 422. For this purpose, the main board 19 may further include a power supply interface 423.

The power supply interface 423 may include a first diode 423a and a second diode 423b. The power supply interface 423 may selectively transmit power supplied from an external power source such as the battery 15 or an adapter to the external microcomputer 422.

When the battery 15 is charged, the power supply interface 423 may supply 3.3V received from the battery 15 to the external microcomputer 422 through the first diode 423a.

When the battery 15 is discharged and the adapter is connected, the power supply interface 423 may supply 3.5V supplied from the adapter to the external microcomputer 422 through the second diode 423b.

As such, according to the embodiment of the present disclosure, the power to the external microcomputer 422 is designed to be supplied by the external power source such as the battery 15 or the adapter, so that power stability of the external microcomputer 422 may be secured even in a discharged state of the battery 15.

The electronic device 10 according to an embodiment of the present disclosure may comprise a battery 15; an external microcomputer 422; and a processor 410 configured to transmit an entry command for a battery protection mode to the external microcomputer if the battery enters the battery protection mode to reduce a power consumption of the battery in a standby mode of the electronic device, wherein the external microcomputer 422 may, after disconnecting a line 501, 502, 503 shared for a system operation between the external microcomputer and the processor according to the entry command, cut off a power supply to the processor.

The electronic device 10 may further comprise a switch 511, 512, 513 disposed on the line 501, 502, 503 to connect or disconnect between the external microcomputer 422 and the processor 410, wherein the external microcomputer 422 may transmitt a low signal to the switch to turn off the switch 511, 512, 513 according to the entry command.

The electronic device 10 may further comprise a charging board 13 that controls power supplied to the battery 15 or the processor 410, the external microcomputer 422 may, after transmitting the low signal to the switch 511, 512, 513 according to the entry command, transmit a power supply cut-off signal to the charging board 13 to cut off the power supply to the processor 410.

The external microcomputer 422 may connect the line 501, 502, 503 shared for the system operation after supplying a power to the processor 410 when the battery protection mode is released.

The electronic device may further comprise a charging board 13 that controls power supplied to the battery or the processor 410, the external microcomputer 422 may transmit a power supply signal for supplying power to the processor 410 upon a release of the battery protection mode.

The electronic device 10 may further comprise a switch 511, 512, 513 disposed on the line 501, 502, 503 to connect or disconnect between the external microcomputer 422 and the processor 410, the external microcomputer 422 may, after transmitting the power supply signal to the charging board 13 upon a release of the battery protection mode, transmit a high signal to turn on the switch to the switch 511, 512, 513.

The processor 410 may determine that the battery protection mode has been entered when a user input is received through a menu.

The processor 410 may determine that the battery protection mode has been entered if the standby mode is entered after disconnecting an external power source.

The external microcomputer 422 may determine that the battery protection mode is released when an IR signal or a key input signal is received.

The external microcomputer 422 may determine that the battery protection mode is released when an external power source is connected to the electronic device 10.

The display device 1 according to an embodiment of the present disclosure may comprise a stand 20, 30, 40, 50; and a head 10 which is supported by the stand and including a display 180, a battery 15, an external microcomputer 422, and a processor 410, the processor 410 may transmit an entry command for a battery protection mode to the external microcomputer 422 if the battery 15 enters the battery protection mode to reduce a power consumption of the battery in a standby mode of the display device 1, the external microcomputer 422 may, after disconnecting a line 501, 502, 503 shared for a system operation between the external microcomputer 422 and the processor 410 according to the entry command, cut off a power supply to the processor 410.

According to an embodiment of the present invention, the above-described method may be implemented as processor-readable code on a program-recorded medium. Examples of media that the processor may read include ROM, RAM, CD-ROM, magnetic tape, floppy disk, and optical data storage devices.

The display device described above is not limited to the configuration and method of the above-described embodiments, and may be configured by selectively combining all or part of each embodiment so that various modifications may be made.

According to an embodiment of the present disclosure, the above-described method may be implemented as processor-readable code on a program-recorded medium. Examples of media that the processor may read include ROM, RAM, CD-ROM, magnetic tape, floppy disk, and optical data storage devices.

The display device described above is not limited to the configuration and method of the above-described embodiments, and the embodiments may be configured by selectively combining all or part of each embodiment so that various modifications may be made. It may be possible.

## Claims

1. An electronic device (10), comprising:
a battery (15);
an external microcomputer (422); and
a processor (410) configured to transmit an entry command for a battery protection mode to the external microcomputer (422) if the battery enters the battery protection mode to reduce a power consumption of the battery (15) in a standby mode of the electronic device (10),
wherein the external microcomputer (422) is configured to:
after disconnecting a line (501, 502, 503) shared for a system operation between the external microcomputer (422) and the processor (410) according to the entry command, cut off a power supply to the processor (410).

2. The electronic device of claim 1, further comprising a switch (511, 512, 513) disposed on the line (501, 502, 503) to connect or disconnect between the external microcomputer (422) and the processor (410),
wherein the external microcomputer (422) is further configured to transmitt a low signal to the switch (511, 512, 513) to turn off the switch according to the entry command.

3. The electronic device of claim 2, further comprising a charging board (13) that controls power supplied to the battery (15) or the processor (410),
wherein the external microcomputer (422) is further configured to, after transmitting the low signal to the switch (511, 512, 513) according to the entry command, transmit a power supply cut-off signal to the charging board (13) to cut off the power supply to the processor (410).

4. The electronic device of any one of claims 1 to 3, wherein the external microcomputer (422) is further configured to connect the line (501, 502, 503) shared for the system operation after supplying a power to the processor (410) when the battery protection mode is released.

5. The electronic device of claim 4, further comprising a charging board (13) that controls power supplied to the battery (15) or the processor (410),
wherein the external microcomputer (422) is further configured to transmit a power supply signal for supplying power to the processor (410) upon a release of the battery protection mode.

6. The electronic device of claim 5, further comprising a switch (511, 512, 513) disposed on the line (501, 502, 503) to connect or disconnect between the external microcomputer (422) and the processor (410),
wherein the external microcomputer (422) is further configured to, after transmitting the power supply signal to the charging board (13) upon a release of the battery protection mode, transmit a high signal to turn on the switch to the switch (511, 512, 513).

7. The electronic device of any one of claims 1 to 6, wherein the processor (410) is further configured to determine that the battery protection mode has been entered when a user input is received through a menu.

8. The electronic device of any one of claims 1 to 7, wherein the processor (410) is further configured to determine that the battery protection mode has been entered if the standby mode is entered after disconnecting an external power source.

9. The electronic device of claim 4, wherein the external microcomputer (422) is further configured to determine that the battery protection mode is released when an IR signal or a key input signal is received.

10. The electronic device of claim 4, wherein the external microcomputer (422) is further configured to determine that the battery protection mode is released when an external power source is connected to the electronic device.

11. A display device (1), comprising:
a stand (20, 30, 40, 50); and
a head (10) which is supported by the stand and including a display (180), a battery (15), an external microcomputer (422), and a processor (410),
wherein the processor (410) is configured to transmit an entry command for a battery protection mode to the external microcomputer (422) if the battery enters the battery protection mode to reduce a power consumption of the battery (15) in a standby mode of the display device (1), and
wherein the external microcomputer (422) is configured to:
after disconnecting a line (501, 502, 503) shared for a system operation between the external microcomputer (422) and the processor (410) according to the entry command, cut off a power supply to the processor (410).

12. The display device of claim 11, wherein the head (10) further comprises a switch (511, 512, 513) disposed on the line (501, 502, 503) to connect or disconnect between the external microcomputer (422) and the processor (410),
wherein the external microcomputer (422) is further configured to transmitt a low signal to the switch (511, 512, 513) to turn off the switch according to the entry command.

13. The display device of claim 12, wherein the head (10) further comprises a charging board (13) that controls power supplied to the battery (15) or the processor (410),
wherein the external microcomputer (422) is further configured to, after transmitting the low signal to the switch (511, 512, 513) according to the entry command, transmit a power supply cut-off signal to the charging board (13) to cut off the power supply to the processor (410).

14. The display device of any one of claims 11 to 13, wherein the external microcomputer (422) is further configured to connect the line (501, 502, 503) shared for the system operation after supplying a power to the processor (410) when the battery protection mode is released.

15. The display device of claim 14, wherein the head (10) further comprise a charging board (13) that controls power supplied to the battery (15) or the processor (410),
wherein the external microcomputer (422) is further configured to transmit a power supply signal for supplying power to the processor (410) upon a release of the battery protection mode,
wherein the head (10) further comprises a switch (511, 512, 513) disposed on the line (501, 502, 503) to connect or disconnect between the external microcomputer (422) and the processor (410),
wherein the external microcomputer (422) is further configured to, after transmitting the power supply signal to the charging board (13) upon a release of the battery protection mode, transmit a high signal to turn on the switch to the switch (511, 512, 513).
